# EUROPÄISCHE PATENTSCHRIFT

(11) **EP 3 966 378 B1**
(45) Veröffentlichungstag und Bekanntmachung des Hinweises auf die Patenterteilung: **26.07.2023**
(21) Anmeldenummer: 20720471.0
(22) Anmeldetag: 28.04.2020
(51) Int. Cl.: D04H 1/4374, B29C 70/08, D04H 3/002, D04H 3/04, B32B 5/26, B29B 11/14, B29B 11/16, B29C 70/22, B32B 5/02

(54) **MULTIAXIALGELEGE MIT DISKONTINUIERLICHER ZWISCHENLAGE**
MULTIAXIAL FABRIC WITH DISCONTINUOUS INTERMEDIATE LAYER
TISSU MULTIAXIAL À COUCHE INTERMÉDIAIRE DISCONTINUE

(30) Priorität: 09.05.2019 US 201962845402 P; 10.05.2019 US 201962845999 P; 12.06.2019 EP 19179663
(43) Veröffentlichungstag der Anmeldung: 16.03.2022
(73) Patentinhaber: Teijin Carbon Europe GmbH, 42103 Wuppertal (DE)
(72) Erfinder: REHBEIN, Johannes, 42697 Solingen (DE); RICHTER, Vera, 40227 Düsseldorf (DE); WOCKATZ, Ronny, 91315 HÖCHSTADT (DE)
(74) Vertreter: CPW GmbH
(86) Internationale Anmeldenummer: PCT/EP2020/061688
(87) Internationale Veröffentlichungsnummer: WO 2020/225019

(56) Entgegenhaltungen:
- EP-A1- 2 636 783
- WO-A1-2011/113752
- WO-A2-2011/048340
- DE-U1-202004 007 601

## Beschreibung

Die Erfindung betrifft ein Multiaxialgelege mit wenigstens zwei Fadenlagen, wobei die Fadenlagen von zueinander parallel ausgerichteten und aneinander anliegenden Multifilamentverstärkungsgarnen ausgebildet wird. Mindestens eine der Fadenlagen steht in einem physischen Kontakt zu einer Vlieslage.

Vlieslagen, die in Kontakt zu Lagen aus Verstärkungsfasergarnen stehen, sind allgemein bekannt. Beispielsweise beschreibt die Druckschrift US 8246882 eine Zwischenlage aus kontinuierlichen Fasern, die zwischen Verstärkungsfaserlagen gelegt werden kann.

In der Schrift EP 2 636 783 wird ein Verbundwerkstoff aus mindestens zwei unterschiedlichen Lagen offenbart. Eine erste Lage kann eine Lage aus Kohlenstofffasern sein, wobei die Kohlenstofffasern eine Länge von 20 bis 100 mm haben können und beispielsweise aus einem Recyclierverfahren stammen. Eine zweite Lage ist eine Wirrfaser-Schicht, beispielsweise aus thermoplastischen Fasern. Beide Schichten werden miteinander vernadelt.

Die Schrift DE 20 2004 007 601 beschreibt ein Multiaxialgelege mit mindestens einem Fadensystem. Dabei kann ein Faservlies Teil des Multiaxialgeleges sein und als Fasern werden Carbonfasern für die Verstärkungsgarne genannt.

Bei der Schrift WO 2011/113752 werden sogenannte Hybridvlieslagen verwendet. Die Schrift WO 2011/048340 beschreibt ein weiteres Multiaxialgelege mit wenigstens zwei Fadenlagen und mindestens einer Vlieslage.

Nachteilig bei den bekannten Zwischenlagen ist, dass die Zwischenlagen in der Regel die Steifigkeit des Aufbaus, in den sie eingebracht sind, erhöhen. Die Drapierung des Aufbaus aus Verstärkungsfaserlagen und Zwischenlagen innerhalb eines formgebenden Werkzeuges beispielsweise, wird dadurch erschwert. Weiterhin ist nachteilig, dass bei der Bauteilherstellung aus den Multiaxialgelegen die Leitfähigkeit durch die Zwischenlagen häufig in Dickenrichtung des Bauteils (Z-Richtung) erschwert wird.

Die Aufgabe der vorliegenden Erfindung besteht darin, die bisher aus dem Stand der Technik bekannten Nachteile zu überwinden.

Gelöst wird die Aufgabe mittels eines Multiaxialgeleges wie oben beschrieben, das als Zwischenlage eine Vlieslage aufweist, wobei das Vlies Ausschnitte aufweist, wobei die Ausschnitte einen Flächeninhalt von mindestens 4 mm² besitzen und die Vlieslage durch die Ausschnitte eine diskontinuierliche Lage ist.

Die Verwendung von Vlieslagen mit Ausschnitten in Multiaxialgelegen - wie in Anspruch 1 beansprucht - hat verschiedene Vorteile. Werden beispielsweise die Fadenlagen aus leitfähigen Fasern gebildet, können die Ausschnitte in der Vlieslage einen direkten Kontakt zu aufeinanderfolgende Fadenlagen herstellen, die in anderen Ausführungsformen der Vlieslage durch die Vlieslage getrennt wären. Es entsteht folglich eine Leitfähigkeit in Z-Richtung (parallel zur Dickenerstreckung), die auch für das spätere Bauteil (hergestellt aus den Multiaxialgelegen) wichtig sein kann. Diese Leitfähigkeit ist beispielsweise im Flugzeugbau zum Schutz vor Schäden bei Blitzschlag relevant. Weiterhin kann die Vlieslage mit Ausschnitten eine spätere Matrixinfusion erleichtern, da das Matrixmaterial besonders gut durch die Ausschnitte fließen und sich verteilen kann. Über die Wahl der Anzahl der Ausschnitte oder die Positionierung der Ausschnitte innerhalb der Vlieslage kann zudem die Fließgeschwindigkeit des Matrixmaterials und auch die Verteilung des Matrixmaterials eingestellt werden.

Beispielsweise kann ein Vliesmaterial mit vielen (auch größeren) Ausschnitten an Stellen im Bauteil vorgesehen werden, die bei der Matrixinfusion in einem normalen Prozess nur schlecht durchtränkt werden. Ohne Änderungen im Infusionsprozess ist vorteilhaft die Anpassung an schwierige Bauteilkonfigurationen möglich.

Mindestens eine der Faserlagen steht in einem direkten Kontakt mit der Vlieslage, wobei die Faserlage die Vlieslage zumindest partiell direkt berührt. Der direkte Kontakt kann dabei auch durch ein Bindermittel der Vlieslage entstehen, das zumindest partiell an und/oder auf der mindestens einen Faserlage klebt oder hängt.

In einer Ausführungsform weist die mindestens eine Vlieslage mehr als 70% diskontinuierliche Fasern auf. Das bedeutet, dass weniger als 30% aller Fasern der Vlieslage kontinuierliche Fasern sind. In einer Ausführungsform sind nahezu alle Fasern der mindestens einen Vlieslage diskontinuierliche Fasern. In einer anderen Ausführungsform weist die mindestens eine Vlieslage mehr als 70% kontinuierliche Fasern auf. Das bedeutet, dass weniger als 30% aller Fasern der Vlieslage diskontinuierliche Fasern sind. In einer besonderen Ausführungsform sind nahezu alle Fasern der mindestens einen Vlieslage kontinuierliche Fasern. Der Ausdruck "nahezu" bedeutet in beiden Fällen mehr als 95% der Fasern. Als kontinuierlich soll eine Faser angesehen werden, wenn ihre Länge mehr als 500 mm beträgt. Die diskontinuierlichen Fasern haben vorzugsweise eine mittlere Faserlänge im Bereich von 8 bis 500 mm, besonders bevorzugt bis 300 mm. Mittlere Faserlänge bedeutet hierbei, dass die diskontinuierlichen Fasern eine Länge in dem angegebenen Bereich haben, die um weniger als 15 % von dem angegebenen Bereich abweicht. Die diskontinuierlichen Fasern können als diskontinuierliche Fasern abgelegt werden und so die Vlieslage bilden oder als kontinuierliche Fasern abgelegt werden und erst durch die Ausschnitte innerhalb der Vlieslage zu diskontinuierlichen Fasern mit der entsprechenden Länge werden.

Eine diskontinuierliche Fläche bildet die Vlieslage gemäß der Erfindung aus, wenn die Vlieslage nicht als annähernd geschlossene Fläche ausgebildet ist. Eine diskontinuierliche Vlieslage ist folglich eine nicht geschlossene Lage, wobei erfindungsgemäß die Nicht-Geschlossenheit mindestens durch die Ausschnitte mit einem Flächeninhalt von mindestens 4mm² erreicht wird. Die Vlieslage kann auch aus anderen Gründen eine diskontinuierliche Fläche ausbilden und trotzdem zusätzlich durch die Ausschnitte diskontinuierlich sein.

Eine diskontinuierliche Vlieslage kann auch dadurch gebildet werden, dass die Vlieslage Schlitze aufweist. Unter einem Schlitz soll ein Einschnitt im Vlies verstanden werden, bei dem mittels eines Schneidinstruments in die Vlieslage geschnitten beziehungsweise die Vlieslage zerteilt wird. Bei einem solchen Schnitt in die Vlieslage wird kein Material der Vlieslage entnommen oder so verdrängt, dass eine Freifläche innerhalb der Vlieslage mit einem Flächeninhalt von mehr als 4mm² entsteht. Eine Vlieslage mit Schlitzen ist daher nicht zu verwechseln mit einer Vlieslage mit Ausschnitten. Bei einer Vlieslage mit Ausschnitten wird Material der Vlieslage aus der Vlieslage entnommen oder verdrängt, wobei Freiflächen (Ausschnitte, Löcher) innerhalb der Vlieslage gebildet werden, die erfindungsgemäß mindestens einen Flächeninhalt von 4mm² haben sollen. In diesem Fall werden Ausschnitte gebildet, die von Schlitzen verschieden sind. Eine geschlitzte Vlieslage ist nicht Teil der Erfindung und wird folglich nicht beansprucht.

In einer Ausführungsform haben die Ausschnitte innerhalb einer Vlieslage gleich oder unterschiedliche Formen und/oder Größen. Die Ausschnitte können beispielsweise eine runde, ovale, eckige oder eine zufällige Kontur aufweisen. Die Größe und der Flächeninhalt der Ausschnitte können zufällig oder gezielt innerhalb der Vlieslage variieren.

Die Mindestgröße von 4mm² für die Ausschnitte ergibt sich aus einem zusammenhängenden Flächeninhalt des Ausschnittes.

Vorzugsweise weist die Vlieslage eine Dicke senkrecht zur Längserstreckung der Vlieslage von etwa 70 µm, besonders bevorzugt von etwa 40 µm, weiterhin bevorzugt von etwa 50 µm und ganz besonders bevorzugt von etwa 25 µm auf. Durch die geringe Dicke der Vlieslage kann vorteilhafterweise der Faservolumenanteil in dem Multiaxialgelege und damit im späteren Bauteil hoch eingestellt werden. Hierdurch können die mechanischen Eigenschaften, wie beispielsweise die Bruchfestigkeit, eines später aus dem Multiaxialgelege hergestellten Bauteils verbessert werden. Zudem verbessert eine dünne Vlieslage mit Ausschnitten weiterhin die Leitfähigkeit eines späteren Bauteils, da die Faserlagen leichter in Kontakt miteinander kommen können.

Durch die diskontinuierliche Vlieslage kann - wie bereits beschrieben - vorteilhafterweise erreicht werden, dass die Fadenlagen des Multiaxialgeleges zumindest partiell in einem direkten Kontakt zueinander stehen, sich also berühren, auch wenn eine Vlieslage dazwischen angeordnet ist. Hierdurch kann die Leitfähigkeit des Multiaxialgeleges beispielsweise in Dickenrichtung erreicht oder verbessert werden, sofern die Fadenlagen des Multiaxialgeleges leitfähig sind. Besonders positiv wirkt sich eine Verbesserung der Leitfähigkeit in Dickenrichtung des Multiaxialgeleges aus, wenn die Vlieslage sowohl diskontinuierlich als auch sehr dünn (weniger als 40µm Dickenerstreckung) ist.

Bevorzugt wird die Vlieslage von Fasern gebildet, die einen Filamentdurchmesser von 3 bis 50 µm haben, besonders bevorzugt bis 35 µm. Durch ausreichend dünne Zwischenlagen (Vlieslagen) können in der Multiaxialware vorteilhaft hohe Faservolumengehalte erreicht werden.

Vorzugsweise entspricht die Breite der Vlieslage der Breite der Fadenlagen. Vorzugsweise ist damit die Breite der Vlieslage gleich der Breite des Multiaxialgeleges. Die Breite der Vlieslage beträgt vorzugsweise 1,3 m, besonders bevorzugt 3,3 m und ganz besonders bevorzugt 5 m und weiterhin ganz besonders bevorzugt 10 m.

Vorzugsweise sind die Multifilamentverstärkungsgarne Kohlenstofffaser-, Glasfaser- oder Aramidgarne oder hochverstreckte UHMW-Polyethylengarne. Auch Mischungen der genannten Fasern können als Multifilamentverstärkungsgarn verwendet werden.

Besonders bevorzugt sind die Multifilamentverstärkungsgarne Kohlenstofffasergarne mit einer Festigkeit von mindestens 5000 MPa, gemessen nach JIS-R- 7608 und einem Zugmodul von mindestens 260 GPa, gemessen nach JIS-R- 7608 und/oder Kohlenstofffasergarne mit einer Festigkeit von mindestens 4500 MPa, gemessen nach JIS-R-7608 und einem Zugmodul von mindestens 240 GPa, gemessen nach JIS-R- 7608.

In einer Ausführungsform weisen zusätzlich die Vlieslagen die genannten Kohlenstofffasergarne auf. Bevorzugt bestehen die Vlieslagen ganz oder teilweise aus den genannten Kohlestofffasern (beispielsweise in Form eines Kohlenstofffaserpapiers).

Vorzugsweise sind die Ausschnitte in der Vlieslage regelmäßig verteilt. Unter einer regelmäßigen Verteilung soll verstanden werden, dass die Anzahl der Ausschnitte pro Flächeneinheit innerhalb der Vlieslage annähernd konstant ist. Annähernd konstant schließt eine Abweichung im Bereich von etwa 5% mit ein. Besonders bevorzugt sind die Ausschnitte innerhalb der Vlieslage in Reihen (Ausschnittsreihen) angeordnet. Die Reihen können vorzugsweise senkrecht, besonders bevorzugt etwa quer, zur Ablagerichtung der Fasern - die die Vlieslage bilden sollen - verlaufen. In einer bevorzugten Ausführungsform weist die Vlieslage eine Mehrzahl von Reihen mit Ausschnitten auf, wobei die Ausschnittsreihen senkrecht zur Ablagerichtung der Fasern verlaufen und die Ausschnitte selbst eine Längserstreckung senkrecht zur Ablagerichtung der Fasern aufweisen. Weiterhin ist bevorzugt, wenn alle benachbarten Ausschnittsreihen einen gleichen Abstand zueinander haben. Es ist zudem bevorzugt, wenn die Ausschnitte direkt benachbarter Ausschnittsreihen einen Versatz zueinander aufweisen. Bei einem solchen Versatz sind die Ausschnitte direkt aufeinander nachfolgender Ausschnittsreihen nicht auf der gleichen Höhe senkrecht zur Längserstreckung der Ausschnittsreihen, sondern weisen einen Höhenunterschied (Versatz) auf. Vorzugsweise entsteht durch den Versatz eine freie Strecke zwischen den Ausschnitten benachbarter Ausschnittsreihen. Innerhalb der freien Strecke liegt in der Vlieslage keine Unterbrechung durch einen Ausschnitt vor. Vorzugsweise alterniert der Versatz innerhalb der Ausschnittsreihen, das bedeutet, dass beispielsweise die Ausschnitte einer ersten und einer dritten Ausschnittsreihe keinen Versatz mehr zueinander aufweisen, jedoch die Ausschnitte der zweiten Ausschnittsreihe einen gleichen Versatz zu den Ausschnitten der ersten und dritten Ausschnittsreihe aufweisen. Die Alternierung kann - wie im genannten Beispiel zu einer gleichen Ausschnittsposition der Ausschnitte jeder zweiten Ausschnittsreihe führen. Allerdings sind auch andere Alternierungen möglich, wie beispielsweise eine gleiche Ausschnittsposition der Ausschnitte für jede dritte oder vierte Ausschnittsreihe.

Vorteilhaft ist die regelmäßige Ausschnittsanordnung innerhalb der Vlieslage, da hierdurch die Eigenschaften der Vlieslage (und damit des Multiaxialgeleges) besonders gut vorhersehbar und an das spätere Bauteil anpassbar wird. Beispielsweise ist die Drapierfähigkeit der Vlieslage etwa an allen Stellen der Vlieslage gleich. Weiterhin ist auch die Permeabilität der Vlieslage in etwa überall gleich innerhalb der Vlieslage.

In einer weiteren bevorzugten Ausführungsform sind die Ausschnitte innerhalb der Vlieslage unregelmäßig verteilt. Unregelmäßig in diesem Zusammenhang bedeutet, dass die Anzahl der Ausschnitte pro Flächeneinheit variiert. Unregelmäßig in diesem Zusammenhang bedeutet auch, dass beispielsweise wenigstens zwei Bereiche innerhalb der Vlieslage vorliegen, indem die Ausschnitte innerhalb des jeweiligen Bereichs zwar gleichmäßig verteilt sind, aber die Verteilung in den wenigstens zwei Bereichen im Vergleich zueinander unterschiedlich erfolgt. Beispielsweise kann in einem ersten Bereich eine andere Ausschnittsreihe (mehr Ausschnitte, größere/längere Ausschnittsflächen, variierender Ausschnittsabstand zueinander innerhalb der Ausschnittsreihe, Versatz der Ausschnitte, Ausschnittsform und/oder Abstand der Ausschnittsreihen zueinander) vorliegen als in einem zweiten Bereich. Eine Vlieslage mit unregelmäßigen Ausschnitten kann besonders gut an das spätere Bauteil angepasst werden. Beispielsweise kann die Vlieslage in Bereichen von starken Konturen des späteren Bauteils eine größere Anzahl von gleichen Ausschnitten aufweisen als in Bereichen des späteren Bauteils mit wenigen Konturen. Hierdurch kann vorteilhafterweise die Drapierfähigkeit des Multiaxialgeleges positiv beeinflusst werden, ohne dass die Handhabbarkeit des Multiaxialgeleges durch eine zu instabile Vlieslage beeinträchtigt werden würde.

Sowohl die regelmäßig als auch die unregelmäßig angeordneten Ausschnitte können Längsausschnitte (bezogen auf die Ablegerichtung der Fäden der Vlieslage), Querausschnitte (bezogen auf die Ablegerichtung der Fäden der Vlieslage), sternenförmige Ausschnitte und/oder Kreuzausschnitte sein.

In einer Ausführungsform werden die Ausschnitte in der Vlieslage durch Ausstanzen und/oder Ausschneiden von Vliesmaterial erzeugt. In einer anderen Ausführungsform werden die Ausschnitte innerhalb der Vlieslage dadurch erzeugt, dass die Fasern der Vlieslage innerhalb der Vlieslage verdrängt werden, sodass ein Ausschnitt entsteht. Im letzten Fall wird also kein Material der Vlieslage entnommen, sondern es wird Material der Vlieslage innerhalb der Vlieslage verschoben. In einem solchen Fall kommt es innerhalb der Vlieslage auch zu Bereichen mit einem erhöhten Anteil an Fasermaterial. Es müssen in jedem Fall aber Ausschnitte (Freiflächen, Löcher) innerhalb der Vlieslage entstehen, die einen Flächeninhalt von mindestens 4 mm² haben. Andernfalls handelt es sich nicht um einen Ausschnitt gemäß dieser Erfindung.

Mögliche Flächeninhalte für die Ausschnitte liegen bei 4 bis 300mm², beispielsweise zwischen 10 bis 100 mm², zwischen 80 bis 150 mm² und/oder zwischen 120 bis 250mm².

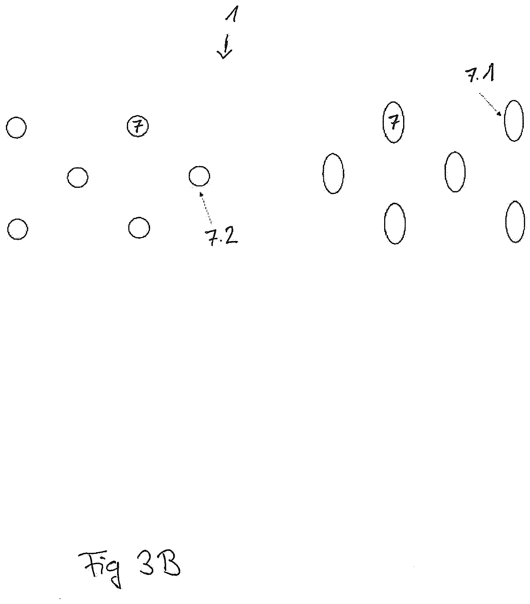

Die Ausschnitte können beispielsweise kreisrund oder von elliptischer Form sein (Figur 3 B). Vorzugsweise beträgt die Fläche dieser Ausschnitte bis zu 200 mm², bevorzugter bis zu 100 mm² und besonders bevorzugt bis zu 10 mm². Der Abstand zwischen den Ausschnitten beträgt bevorzugt ca. 100 mm, bevorzugter bis zu 50 mm und noch bevorzugter bis zu 15 mm.

In einer Ausführungsform weist die Vlieslage ein leitfähiges Material auf. Das leitfähige Material kann als Extralage auf der Vlieslage positioniert oder mittels Pulver, Partikel, Fasern oder Tröpfchen in oder auf die Vlieslage ein- oder aufgebracht sein. Vorzugsweise weist die Vlieslage Kohlenstofffasern auf, die innerhalb der Vlieslage in etwa homogen verteilt sind. In einer weiteren Ausführungsform weist die Vlieslage beschichtete leitfähige Fasern auf, die auf der Vlieslage (beispielsweise als Extralage) und/oder innerhalb der Vlieslage vorzufinden sind. Als Beschichtungsmaterial eignet sich beispielsweise Kupfer, Silber, Nickel oder andere Metalle sowie Mischungen der genannten Beschichtungsmaterialien. Die Ausschnitte können in einer Ausführungsform auch in der Extralage vorhanden sein. Beispielsweise können die Ausschnitte nach der Positionierung der Extralage auf der Vlieslage in die Vlieslage und der Extralage (gleichzeitig oder zeitlich versetzt) eingebracht werden, sodass an gleicher Position Ausschnitte innerhalb der Vlieslage und innerhalb der Extralage gebildet werden.

In einer Ausführungsform weist die Vlieslage ein Bindermaterial auf. Mittels des Bindermaterials werden die Fasern der Vlieslage innerhalb der Vlieslage stabilisiert und zusammengehalten. Als Bindermaterial kann beispielsweise Styrolacrylharz und/oder Bisphenol-A und/oder ähnliche verwendet werden. Bevorzugte Partikelgrößen für die einzusetzenden Binder liegen in einem Bereich von 50 - 160 µm, besonders bevorzugt zwischen 80-140 µm.

In einer weiteren Ausführungsform weist die Vlieslage einen Polyester auf. Vorzugsweise bestehen die Fasern, die die Vlieslage bilden, aus Polyester. Besonders bevorzugt besteht die Vlieslage aus Kurzfasern aus Polyester.

Vorzugsweise wird die Vlieslage hergestellt durch ein Nassverfahren (wet-laid). Hiermit wird eine geschlossene und gleichmäßige Oberflächenqualität vor der Einbringung der Ausschnitte erreicht. Ein zusätzlicher Binderauftrag findet entweder durch direkte Beimischung des Binders bereits während der Vliesherstellung oder durch separate nachträgliche Aufbringung durch einen Beschichtungsprozess auf die Oberfläche statt. In anderen Ausführungsformen kann die Vlieslage auch durch einen Spunlaced, Spunlaid und/oder Needlepunch Verfahren hergestellt werden. Durch die eben genannten Herstellungsverfahren können eher offene Strukturen mit verbessertem Drapier- und Permeabilitätseigenschaften hergestellt werden.

Bei allen genannten Herstellungsverfahren der Vlieslage kann vorzugsweise ein Binder zugegeben werden, wobei der Binder durch ein Tränkbad der Fasern der Vlieslage, durch ein Tränkbad der fertigen Vlieslage und/oder durch Berieselung der gebildeten Vlieslage mit einem Binderpulver mit einer bevorzugten Partikelgröße im Bereich von 50 - 160 µm und anschließendem Anschmelzen des Binderpulvers zur Verbindung mit den Fasern der Vlieslage, in den Herstellungsprozess eingebracht wird.

Unabhängig von dem Herstellungsverfahren können die Ausschnitte nach der Herstellung des Vlieses in das Vlies eingebracht werden oder bei der Herstellung der Vlieslage innerhalb der Vlieslage erzeugt werden. Beispielsweise kann eine Vlieslage ohne Ausschnitte vor der Verfestigung der Vlieslage über ein Dornengitter gezogen werden, sodass durch Verdrängung von Fasermaterial innerhalb der Vlieslage Ausschnitte mit einem zusammenhängenden Flächeninhalt von mindestens 4 mm² gebildet werden. Bei einer Ausschnittsbildung durch Verdrängung des Materials der Vlieslage muss der Flächeninhalt zusammenhängend eine Größe von mindestens 4 mm² haben. In einer anderen Ausführungsform kann beispielsweise im wet-laid Prozess die Lochgröße des Siebes bei der Ablage so variiert werden, dass Ausschnitte im Vlies entstehen.

In einer Ausführungsform der Erfindung weist die Vlieslage ein thermoplastisches Polymermaterial auf, wobei das thermoplastische Polymermaterial eine erste Polymerkomponente und eine zweite Polymerkomponente umfasst, deren Schmelztemperaturen unterhalb der Schmelz- oder Zersetzungstemperatur der Multifilamentverstärkungsgarne liegen, wobei die erste Polymerkomponente eine niedrigere Schmelztemperatur aufweist als die zweite Polymerkomponente und die erste Polymerkomponente in Epoxid-, Cyanatester-, oder Benzoxazin-Matrixharzen oder in Mischungen dieser Matrixharze löslich und die zweite Polymerkomponente in Epoxid-, Cyanatester-, oder Benzoxazin-Matrixharzen oder in Mischungen dieser Matrixharze nicht löslich ist.

Vorzugsweise weist die erste Polymerkomponente eine Schmelztemperatur im Bereich zwischen 80 und 135°C und die zweite Polymerkomponente eine Schmelztemperatur im Bereich zwischen 140 und 250°C auf.

Aufgrund seines spezifischen Aufbaus zeichnet sich das Multiaxialgelege durch eine gute Drapierbarkeit und Fixierbarkeit der Fadenlagen in einer Preform aus, durch eine gute Durchlässigkeit bei der Infiltrierung mit Matrixharz sowie dadurch, dass mit ihnen Bauteile mit hohen mechanischen Festigkeiten und mit hoher Schlagzähigkeit herstellbar sind. Bei der Bauteilherstellung wird das Multiaxialgelege mit der mindestens einen Vlieslage aus den genannten Polymerkombinationen in die gewünschte Form gebracht und über die Schmelztemperatur der ersten Polymerkomponente erhitzt. Bei Abkühlung der Preform wirkt dann die erste Polymerkomponente als Schmelzkleber und fixiert die Fadenlagen in ihrer Position.

Bei der nachfolgenden Infiltrierung des Multiaxialgeleges, wobei bevorzugt eine Vielzahl von Multiaxialgelegen einen Gelegeaufbau (Lagenaufbau) bilden, mit Matrixharz, die in der Regel bei Temperaturen oberhalb der Schmelztemperatur der ersten, jedoch unterhalb der Schmelztemperatur der zweiten Komponente erfolgt, ist durch die höherschmelzende zweite Polymerkomponente der Vlieslage ebenfalls eine gute Durchlässigkeit für das Matrixharz gewährleistet. Die erste Polymerkomponente hingegen löst sich im Matrixharz auf und verliert auf diese Weise seine Identität als eigenständige Phase gegenüber dem Matrixharz. Daher ist der Anteil der ersten Polymerkomponente somit dem Matrixmaterial zuzurechnen und der zu infiltrierende Anteil an Matrixharz kann um den Anteil der ersten Polymerkomponente reduziert werden. Infolgedessen können hohe Faservolumenanteile der Multifilamentverstärkungsgarne im resultierenden Bauteil eingestellt und damit das Niveau der mechanischen Festigkeitskennwerte auf hohem Niveau gehalten werden.

Die in dem Multiaxialgelege eingesetzte Vlieslage kann dabei aus einer Mischung von Monokomponentenfasern mit unterschiedlichen Schmelztemperaturen bestehen, also ein Hybridvlies sein. Die Vlieslage kann jedoch auch aus Bikomponentenfasern bestehen, beispielsweise aus Kern-Mantel Fasern, wobei der Kern der Faser aus einem höher schmelzenden Polymer und der Mantel aus einem niedriger schmelzenden Polymer aufgebaut ist. Vorzugsweise ist die Vlieslage ein Hybridvlies. Dabei hat es sich als vorteilhaft herausgestellt, wenn die Vlieslage die erste Polymerkomponente in einem Anteil von 20 bis 40 Gew.-% und die zweite Polymerkomponente in einem Anteil von 60 bis 80 Gew.-% enthält.

Bei der Aushärtetemperatur des Matrixharzes, d.h. des Epoxid-, Cyanatester-, oder Benzoxazinharzes, reagiert in einer bevorzugten Ausführungsform die erste Polymerkomponente chemisch mit dem aushärtenden Matrixharz über Vernetzungsreaktionen und wird so integraler Teil einer homogenen Matrix. Daher ist die erste Polymerkomponente vorzugsweise ein mit Epoxid-, Cyanatester-, oder Benzoxazin-Matrixharzen über chemische Vernetzungsreaktionen reagierendes Polymer. Besonders bevorzugt ist die erste Polymerkomponente ein Polyhydroxyether. Derartige Polyhydroxyether werden z.B. in der EP 1 705 269 beschrieben, auf deren diesbezügliche Offenbarung sich ausdrücklich bezogen wird.

Vorzugsweise weist die zweite Polymerkomponente eine höhere Schmelztemperatur als die erste Polymerkomponente auf. Bevorzugt schmilzt die zweite Polymerkomponente bei der Härtungstemperatur des eingesetzten Matrixharzes oder bei Temperaturen im Bereich zwischen der Schmelztemperatur der ersten Polymerkomponente und der Härtungstemperatur des Matrixharzes. Auf diese Weise wird die zweite Polymerkomponente ebenfalls in das Matrixmaterial eingebunden, bildet jedoch im Unterschied zur ersten Polymerkomponente im ausgehärteten Matrixharz eine eigene Phase aus. Diese durch die zweite Polymerkomponente ausgebildete Phase hilft bei der Aushärtung und im späteren Bauteil, eine Ausbreitung von Rissen zu begrenzen und trägt so z.B. zur Erhöhung der Schlagzähigkeit entscheidend bei.

Als zweite Polymerkomponente der Vlieslage können übliche zu thermoplastischen Fäden verarbeitbare Polymere eingesetzt werden, solange sie die anspruchsgemäßen Bedingungen erfüllen, wie z.B. Polyamide, Polyimide, Polyamidimide, Polyester, Polybutadiene, Polyurethane, Polypropylene, Polyetherimide, Polysulfone, Polyethersulfone, Polyphenylensulfone, Polyphenylensulfide, Polyetherketone, Polyetheretherketone, Polyarylamide, Polyketone, Polyphtalamide, Polyphenylenether, Polybutylentherephtalate oder Polyethylentherephthalate oder Copolymere oder Mischungen diese Polymere.

Im Hinblick auf die zuvor genannten Matrixharze ist bevorzugt, wenn die zweite Polymerkomponente ein Polyamidhomopolymer oder Polyamidcopolymer oder eine Mischung aus Polyamidhomopolymeren und/oder Polyamidcopolymeren ist. Besonders bevorzugt ist das Polyamid-Homopolymer oder -Copolymer ein Polyamid 6, Polyamid 6.6, Polyamid 6.12, Polyamid 4.6, Polyamid 11, Polyamid 12 oder Polyamid 6/12.

Im Hinblick auf eine Vergleichmäßigung der Materialeigenschaften über die Dicke des Multiaxialgeleges ist es vorteilhaft, wenn bei dem Multiaxialgelege zwischen jeder Fadenlage aus Multifilamentverstärkungsgarnen eine Vlieslage angeordnet ist. Im Hinblick auf die Eigenschaften des mit dem Multiaxialgelege hergestellten Bauteils und im Hinblick auf ein möglichst hohes Kennwertniveau der mechanischen Eigenschaften ist es ebenso bevorzugt, wenn die Vlieslage ein Flächengewicht im Bereich von 3 und 25 g/m² aufweist. Besonders bevorzugt liegt das Flächengewicht im Bereich von 4 und 10 g/m².

Ein weiterer Gegenstand der Erfindung ist ein Lagenaufbau zur Herstellung eines faserverstärkten Verbundwerkstoffes mit mindestens einem Multiaxialgelege, wie vorhergehend beschrieben. Der Lagenaufbau mit der mindestens einen Multiaxiallage kann eine Preform sein oder ein faserverstärktes Bauteil, wenn ein zusätzliches Matrixmaterial in den Lagenaufbau eingebracht wurde.

Die Erfindung wird anhand von Figuren näher erläutert.
Figur 1 zeigt schematisch eine Ausführungsform einer Vlieslage mit Schlitzen, die nicht erfindungsgemäß ist.
Figur 2 zeigt schematisch verschiedene Schlitzformen, die ebenfalls nicht erfindungsgemäß sind.
Figur 3 A und B zeigen schematisch eine Ausführungsform einer Vlieslage mit Ausschnitten.
Figur 4 zeigt schematisch eine Vlieslage mit Ausschnitttsreihen.
Figur 5 zeigt schematisch eine Vlieslage mit einem Ausschnitt, der durch Materialverdrängung entstanden ist.

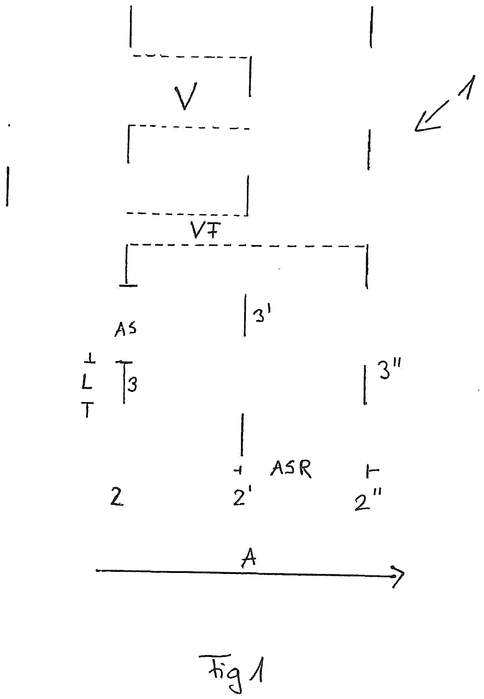

Die Figur 1 zeigt eine nicht erfindungsgemäße Ausführungsform mit Schlitzen in der Vlieslage 1. Figur 1 zeigt schematisch einen Ausschnitt aus einem Schlitzmuster einer Vlieslage 1. Die Vlieslage 1 weist etwa senkrecht zur Ablegerichtung A der Fasern Schlitzreihen 2 mit Schlitzen 3 auf. In der Figur sind die Schlitze 3 als Längsschlitze ausgebildet, wobei sich ihre Längserstreckung parallel zur Längserstreckung der Schlitzreihe 2 erstreckt. Innerhalb einer Schlitzreihe 2 haben die Schlitze 3 einen Abstand AS zueinander. Die Schlitzreihen 2 haben einen Abstand ASR zueinander. Benachbarte Schlitzreihen 2", 2' können Schlitze 3', 3" aufweisen, die zueinander einen Versatz V haben. Der Versatz V ist in Figur 1 alternierend für jede zweite Schlitzreihe 2 vorgesehen, sodass die Position der Schlitze 3 einer Schlitzreihe 2 und einer übernächsten Schlitzreihe 2‴ auf der gleichen Höhe senkrecht zur Längserstreckung der Schlitzreihen 2 liegen. Die Schlitze 3 haben in der Figur 1 eine Länge L. Durch den Versatz V der Schlitze 3,3'und 3" ergibt sich eine freie Strecke VF. Werden die diskontinuierlichen Fasern erst durch die Schlitze 3 in der Vlieslage 1 gebildet, können die Fasern der Vlieslage 1 höchstens über die Strecke VF verlaufen, bevor sie durch einen Schlitz 3 zertrennt werden. Es versteht sich, dass die Länge der diskontinuierlichen Faser der Vlieslage 1 länger sein kann als VF, da die Faser innerhalb der Vlieslage gewellt/gekrümmt vorliegen kann.

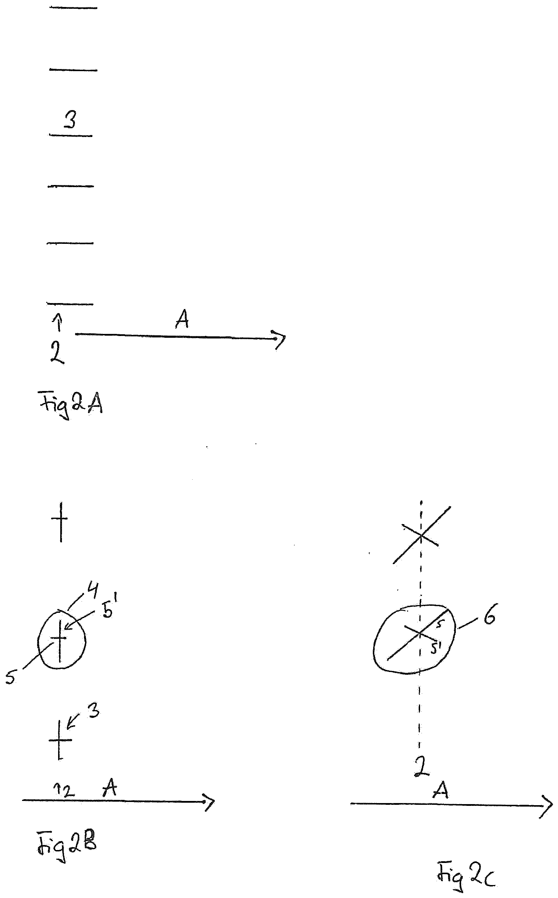

Die Figur 2 zeigt ebenfalls eine nicht erfindungsgemäße Ausführungsform. Figur 2 zeigt schematisch verschiedene Formen der Schlitze 3. In Figur 2 A sind die Schlitze 3 Querschlitze, deren Längserstreckung im Wesentlichen senkrecht zur Längserstreckung der Schlitzreihe 2 verlaufen. In Figur 2 B haben die Schlitze 2 eine Kreuzform 4 mit zwei Einschnitten 5 5', wobei ein Einschnitt 5'parallel zur Längserstreckung der Schlitzreihe 2 verläuft. In Figur 2 C sind die Schlitze 3 in Sternenform 6 ausgebildet, wobei die Sternenform 6 mindestens zwei Einschnitte 5, 5'aufweist. Bei zwei Einschnitten 5, 5'in Sternenform 6 ist keiner der Einschnitte 5, 5'parallel oder senkrecht zur Längserstreckung der Schlitzreihe 2 angeordnet. Allgemein unterscheidet sich die Sternenform 6 folglich von der Kreuzform 4 dadurch, dass sie mindestens einen Einschnitt 5 aufweist, der in einem Winkel zur Längserstreckung der Schlitzreihen 2 angeordnet ist.

Innerhalb einer Vlieslage 1 können unterschiedliche Formen der Schlitze 3 vorliegen. Dabei können die unterschiedlichen Schlitzformen auch innerhalb einer Schlitzreihe 2 vorliegen.

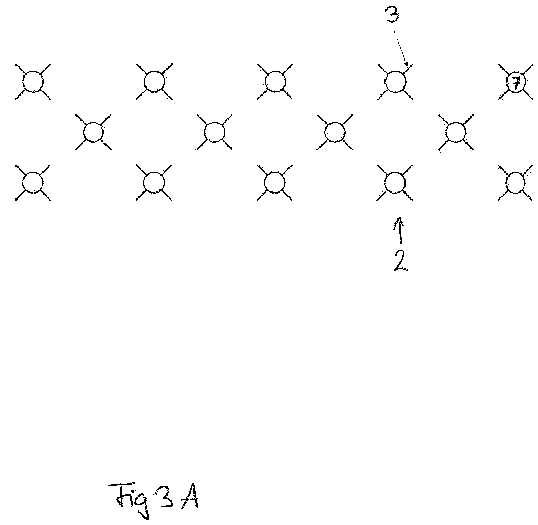

In Figur 3 A ist schematisch eine Vlieslage mit Ausschnitten 7 in Kombination mit Schlitzen in Sternenform dargestellt. Die Ausschnitte 7 sind beispielsweise dadurch entstanden, dass Material aus der Vlieslage 1 ausgestanzt wurde.

In Figur 3 B sind zwei mögliche Arten der Ausschnitte 7 für die Vlieslage 1 dargestellt. Die Ausschnitte 7 können oval 7.1 oder rund 7.2 gestaltet werden, wobei innerhalb der Vlieslage 1 eine einzige Art von Ausschnitten 7 oder auch eine Mischung verschiedener Arten von Ausschnitten 7 vorhanden sein können. Alle Ausschnitte 7 nach dieser Art haben aber gemeinsam, dass Material aus der Vlieslage 1 entnommen wurde.

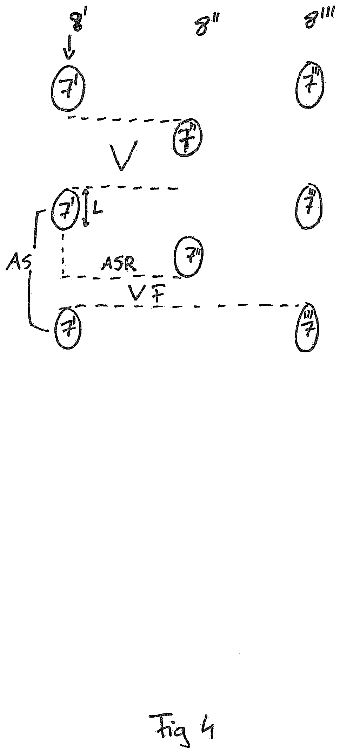

Figur 4 zeigt schematisch Ausschnittsreihen 8 mit Ausschnitten 7. Innerhalb einer Ausschnittsreihe 8 haben die Ausschnitte 7 einen Abstand AS zueinander. Die Ausschnittsreihen 8 haben einen Abstand ASR zueinander. Benachbarte Ausschnittsreihen 8', 8" können Ausschnitte 7', 7" aufweisen, die zueinander einen Versatz V haben. Der Versatz V ist im Ausführungsbeispiel in Figur 4 alternierend für jede zweite Ausschnittsreihe 2 vorgesehen, sodass die Position der Ausschnitte 7 einer Ausschnittsreihe 8 und einer übernächsten Ausschnittsreihe 8‴ auf der gleichen Höhe senkrecht zur Längserstreckung der Ausschnittsreihe 8 liegen. Die Ausschnitte 7 haben in der Figur 4 eine Länge L. Durch den Versatz V der Ausschnitte 7', 7"und 7‴ ergibt sich eine freie Strecke VF. Werden die diskontinuierlichen Fasern erst durch die Ausschnitte 7 in der

Vlieslage 1 gebildet, können die Fasern der Vlieslage 1 höchstens über die Strecke VF verlaufen, bevor sie durch einen Ausschnitt 7 zertrennt werden. Es versteht sich, dass die Länge der diskontinuierlichen Fasern der Vlieslage 1 länger sein kann als VF, da die Fasern innerhalb der Vlieslage gewellt/gekrümmt vorliegen können.

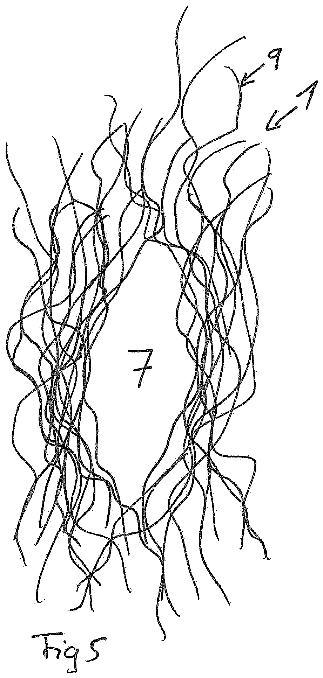

Figur 5 zeigt schematisch ein Detailausschnitt aus einer Vlieslage 1 mit Ausschnitt 7, bei dem der Ausschnitt 7 durch Verdrängung von Fasermaterial innerhalb der Vlieslage 1 entstanden ist. Im Ausführungsbeispiel werden die Fasern 9 innerhalb der Vlieslage 1 so abgelenkt (verschoben), dass eine Öffnung oder Loch innerhalb der Vlieslage 1 entsteht, sodass ein Ausschnitt 7 gebildet wird. Der Ausschnitt 7 soll eine Größe von mindestens 4mm² haben, das heißt, das Loch oder die Öffnung soll einen zusammenhängenden Flächeninhalt von mindestens 4mm² haben. Ein zusammenhängender Flächeninhalt ist gegeben, wenn der Ausschnitt 7 nicht durch Vliesmaterial - wie beispielsweise einer Mehrzahl von Fasern - unterbrochen wird.

## Patentansprüche

1. Multiaxialgelege mit wenigstens zwei Fadenlagen und mindestens einer Vlieslage (1), wobei jede Fadenlage von innerhalb der Fadenlagen zueinander parallel und nebeneinander aneinander anliegend angeordneten Multifilamentverstärkungsgarnen gebildet wird, wobei sich mindestens eine Fadenlage mit der Vlieslage (1) zumindest partiell direkt berühren, **dadurch gekennzeichnet, dass** innerhalb der Vlieslage (1) Ausschnitte (7) vorgesehen sind, wobei die Ausschnitte einen Flächeninhalt von mindestens 4 mm² besitzen und die Vlieslage(1) mindestens durch die Ausschnitte (7) eine diskontinuierliche Lage ist.

2. Multiaxialgelege nach Anspruch 1, wobei die Ausschnitte (7) regelmäßig oder zufällig unregelmäßig in der Vlieslage (1) angeordnet sind.

3. Multiaxialgelege nach mindestens einem der vorhergehenden Ansprüche, wobei die Ausschnitte (7) gleiche oder unterschiedliche Formen und/oder Größen aufweisen.

4. Multiaxialgelege nach mindestens einem der vorhergehenden Ansprüche, wobei die Vlieslage (1) ein leitfähiges Material aufweist, wobei das leitfähige Material mittels Pulver und/oder Partikeln auf- und in die Vlieslage (1) eingebracht ist und/oder die Vlieslage (1) leitfähige Fasern aufweist.

5. Multiaxialgelege nach mindestens einem der vorhergehenden Ansprüche, wobei die Vlieslage (1) einen Binder aufweist, welcher eine bevorzugte Partikelgröße von 50 - 160 µm hat und/oder die Vlieslage (1) eine Dicke aufweist, die weniger als 40 µm beträgt.

6. Multiaxialgelege nach einem der Ansprüche 1 bis 4, wobei die Vlieslage (1) 70% kontinuierliche Fasern mit einer Faserlänge von mehr als 20m aufweist oder die Vlieslage (1) 70% Kurzfasern mit einer Faserlänge im Bereich von 8 bis 15 mm aufweist.

7. Multiaxialgelege nach mindestens einem der vorhergehenden Ansprüche, wobei die Multifilamentverstärkungsgarne Kohlenstoffgarne sind mit einer Festigkeit von mindestens 5000 MPa, gemessen nach JIS-R- 7608 und einem Zugmodul von mindestens 260 GPa, gemessen nach JIS-R- 7608 sind und/oder Kohlenstofffasergarne mit einer Festigkeit von mindestens 4500 MPa, gemessen nach JIS-R-7608 und einem Zugmodul von mindestens 240 GPa, gemessen nach JIS-R- 7608.

8. Multiaxialgelege nach mindestens einem der vorhergehenden Ansprüche, wobei die Vlieslage (1) einen Polyester aufweist.

9. Multiaxialgelege nach einem der vorhergehenden Ansprüche 1 bis 7, wobei die Vlieslage (1) ein thermoplastisches Polymermaterial aufweist, wobei das thermoplastische Polymermaterial eine erste Polymerkomponente und eine zweite Polymerkomponente umfasst, deren Schmelztemperaturen unterhalb der Schmelz- oder Zersetzungstemperatur der Multifilamentverstärkungsgarne liegen, wobei die erste Polymerkomponente eine niedrigere Schmelztemperatur aufweist als die zweite Polymerkomponente und die erste Polymerkomponente in Epoxid-, Cyanatester-, oder Benzoxazin-Matrixharzen oder in Mischungen dieser Matrixharze löslich und die zweite Polymerkomponente in Epoxid-, Cyanatester-, oder Benzoxazin-Matrixharzen oder in Mischungen dieser Matrixharze nicht löslich ist.

10. Multiaxialgelege nach Anspruch 9, wobei die erste Polymerkomponente eine Schmelztemperatur im Bereich zwischen 80 und 135°C und die zweite Polymerkomponente eine Schmelztemperatur im Bereich zwischen 140 und 250°C aufweist.

11. Multiaxialgelege nach Anspruch 9, wobei die zweite Polymerkomponente ein Polyamid-Homopolymer oder Polyamid-Copolymer oder eine Mischung aus Polyamid-Homopolymeren und/oder Polyamid-Copolymeren ist.

12. Multiaxialgelege nach Anspruch 11, wobei das Polyamid-Homopolymer oder -Copolymer ein Polyamid 6, Polyamid 6.6, Polyamid 6.12, Polyamid 4.6, Polyamid 11, Polyamid 12 oder Polyamid 6/12 ist.

13. Multiaxialgelege nach Anspruch 9, wobei die erste Polymerkomponente ein mit Epoxid-, Cyanatester-, oder Benzoxazin-Matrixharzen bei der Vernetzung dieser Matrixharze chemisch reagierendes Polymer ist.

14. Multiaxialgelege nach Anspruch 9, wobei die erste Polymerkomponente ein Polyhydroxyether ist.

15. Multiaxialgelege nach Anspruch 9, wobei die Vlieslage (1) die erste Polymerkomponente in einem Anteil von 20 bis 40 Gew.-% und die zweite Polymerkomponente in einem Anteil von 60 bis 80 Gew.-% enthält.

## Claims

1. Multiaxial scrim with at least two thread layers and at least one nonwoven layer (1), wherein each thread layer is formed by multifilament reinforcing yarns arranged parallel to and adjacent to one another within the thread layers, wherein at least one thread layer is at least partially in direct contact with the nonwoven layer (1), **characterised in that** within the nonwoven layer (1) cutouts (7) are provided, wherein the cutouts have an area of at least 4 mm² and the nonwoven layer (1) is a discontinuous layer at least through the cutouts (7).

2. Multiaxial scrim according to claim 1, wherein the cutouts (7) are arranged regularly or randomly irregularly in the nonwoven layer (1).

3. Multiaxial scrim according to at least one of the preceding claims, wherein the cutouts (7) have identical or different shapes and/or sizes.

4. Multiaxial scrim according to at least one of the preceding claims, wherein the nonwoven layer (1) comprises a conductive material, wherein the conductive material is applied to and incorporated into the nonwoven layer (1) by means of powder and/or particles and/or the nonwoven layer (1) comprises conductive fibres.

5. Multiaxial scrim according to at least one of the preceding claims, wherein the nonwoven layer (1) comprises a binder, which has a preferred particle size of 50-160 µm and/or the nonwoven layer (1) has a thickness which is less than 40 µm.

6. Multiaxial scrim according to any of claims 1 to 4, wherein the nonwoven layer (1) has 70% continuous fibres with a fibre length of more than 20m or the nonwoven layer (1) comprises 70% short fibres having a fibre length in the range of 8 to 15 mm.

7. Multiaxial scrim according to at least one of the preceding claims, wherein the multifilament reinforcing yarns are carbon yarns with a strength of at least 5000 MPa, measured according to JIS-R- 7608 and a tensile modulus of at least 260 GPa, measured according to JIS-R- 7608 and/or carbon fibre yarns with a strength of at least 4500 MPa, measured according to JIS-R-7608 and a tensile modulus of at least 240 GPa, measured according to JIS-R- 7608.

8. Multiaxial scrim according to at least one of the preceding claims, wherein the nonwoven layer (1) comprises a polyester.

9. Multiaxial scrim according to any of the preceding claims 1 to 7, wherein the nonwoven layer (1) comprises a thermoplastic polymer material, wherein the thermoplastic polymer material comprises a first polymer component and a second polymer component, the melting temperatures of which are below the melting or decomposition temperature of the multifilament reinforcing yarns, wherein the first polymer component has a lower melting temperature than the second polymer component and the first polymer component is soluble in epoxy, cyanate ester or benzoxazine matrix resins or in mixtures of these matrix resins and the second polymer component is not soluble in epoxy, cyanate ester, or benzoxazine matrix resins or in mixtures of these matrix resins.

10. Multiaxial scrim according to claim 9, wherein the first polymer component has a melting temperature in the range between 80 and 135°C and the second polymer component has a melting temperature in the range between 140 and 250°C.

11. Multiaxial scrim according to claim 9, wherein the second polymer component is a polyamide homopolymer or polyamide copolymer or a mixture of polyamide homopolymers and/or polyamide copolymers.

12. Multiaxial scrim according to claim 11, wherein the polyamide homopolymer or copolymer is a polyamide 6, polyamide 6.6, polyamide 6.12, polyamide 4.6, polyamide 11, polyamide 12 or polyamide 6/12.

13. Multiaxial scrim according to claim 9, wherein the first polymer component is a polymer that chemically reacts with epoxy, cyanate ester, or benzoxazine matrix resins upon cross-linking of said matrix resins.

14. Multiaxial scrim according to claim 9, wherein the first polymer component is a polyhydroxy ether.

15. Multiaxial scrim according to claim 9, wherein the nonwoven layer (1) contains the first polymer component in a proportion of 20 to 40 wt.% and the second polymer component in a proportion of 60 to 80 wt.%.

## Revendications

1. Tissu multiaxial avec au moins deux couches de fils et au moins une couche de non-tissé (1), dans lequel chaque couche de fils est formée par des fils de renforcement multifilaments agencés parallèlement les uns aux autres et côte à côte à l'intérieur des couches de fils, dans lequel au moins une couche de fils est en contact au moins partiellement directement avec la couche de non-tissé (1), **caractérisé en ce que** des découpes (7) sont prévues à l'intérieur de la couche de non-tissé (1), dans lequel les découpes possèdent une superficie d'au moins 4 mm² et la couche de non-tissé (1) est une couche discontinue au moins par les découpes (7).

2. Tissu multiaxial selon la revendication 1, dans lequel les découpes (7) sont agencées de manière régulière ou aléatoirement irrégulière dans la couche de tissu (1).

3. Tissu multiaxial selon au moins l'une quelconque des revendications précédentes, dans laquelle les découpes (7) présentent des formes et/ou des tailles identiques ou différentes.

4. Tissu multiaxial selon au moins l'une quelconque des revendications précédentes, dans lequel la couche de non-tissé (1) présente un matériau conducteur, dans lequel le matériau conducteur est appliqué sur et dans la couche de non-tissé (1) au moyen de poudre et/ou de particules et/ou la couche de non-tissé (1) présente des fibres conductrices.

5. Tissu multiaxial selon au moins l'une quelconque des revendications précédentes, dans lequel la couche de non-tissé (1) présente un liant qui a une taille de particules préférée de 50 à 160 µm et/ou la couche de non-tissé (1) présente une épaisseur qui est inférieure à 40 µm.

6. Tissu multiaxial selon l'une quelconque des revendications 1 à 4, dans lequel la couche de non-tissé (1) présente 70 % de fibres continues avec une longueur de fibres supérieure à 20 m ou la couche de non-tissé (1) présente 70 % de fibres courtes avec une longueur de fibres dans la plage de 8 à 15 mm.

7. Tissu multiaxial selon au moins l'une quelconque des revendications précédentes, dans lequel les fils de renforcement multifilaments sont des fils de carbone avec une résistance d'au moins 5 000 MPa, mesurée selon JIS-R- 7608 et un module de traction d'au moins 260 GPa, mesuré selon JIS-R- 7608, et/ou des fils de fibres de carbone avec une résistance d'au moins 4 500 MPa, mesurée selon JIS-R-7608 et un module de traction d'au moins 240 GPa, mesuré selon JIS-R-7608.

8. Tissu multiaxial selon au moins l'une quelconque des revendications précédentes, dans lequel la couche de tissu (1) présente un polyester.

9. Tissu multiaxial selon l'une quelconque des revendications précédentes 1 à 7, dans lequel la couche de non-tissé (1) présente un matériau polymère thermoplastique, dans lequel le matériau polymère thermoplastique comprend un premier composant polymère et un second composant polymère dont les températures de fusion sont inférieures à la température de fusion ou de décomposition des fils de renforcement multifilaments, dans lequel le premier composant polymère présente une température de fusion inférieure à celle du second composant polymère et le premier composant polymère est soluble dans les résines de matrice époxyde, ester de cyanate ou benzoxazine ou dans des mélanges de ces résines de matrice et le second composant polymère n'est pas soluble dans les résines de matrice époxyde, ester de cyanate ou benzoxazine ou dans des mélanges de ces résines de matrice.

10. Tissu multiaxial selon la revendication 9, dans lequel le premier composant polymère présente une température de fusion dans la plage comprise entre 80 et 135 °C et le second composant polymère présente une température de fusion dans la plage comprise entre 140 et 250 °C.

11. Tissu multiaxial selon la revendication 9, dans lequel le second composant polymère est un homopolymère de polyamide ou un copolymère de polyamide ou un mélange d'homopolymères de polyamide et/ou de copolymères de polyamide.

12. Tissu multiaxial selon la revendication 11, dans lequel l'homopolymère ou le copolymère de polyamide est un polyamide 6, un polyamide 6.6, un polyamide 6.12, un polyamide 4.6, un polyamide 11, un polyamide 12 ou un polyamide 6/12.

13. Tissu multiaxial selon la revendication 9, dans lequel le premier composant polymère est un polymère réagissant chimiquement avec des résines de matrice époxyde, ester de cyanate ou benzoxazine lors de la réticulation de ces résines de matrice.

14. Tissu multiaxial selon la revendication 9, dans lequel le premier composant polymère est un polyhydroxyéther.

15. Tissu multiaxial selon la revendication 9, dans lequel la couche de non-tissé (1) contient le premier composant polymère à raison de 20 à 40 % en poids et le second composant polymère à raison de 60 à 80 % en poids.
